(19) **Europäisches Patentamt / European Patent Office / Office européen des brevets**

(11) **EP 4 525 384 A1**

(12) **EUROPEAN PATENT APPLICATION**

(43) Date of publication:
**19.03.2025 Bulletin 2025/12**

(21) Application number: **23197427.0**

(22) Date of filing: **14.09.2023**

(51) International Patent Classification (IPC):
**H04L 25/02** *(2006.01)* **H04L 27/26** *(2006.01)*

(52) Cooperative Patent Classification (CPC):
**H04L 25/0256; H04L 27/26532; H04L 25/0224**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLKSWAGEN AG**
**38440 Wolfsburg (DE)**

(72) Inventors:
• **Pfadler, Andreas**
  **13357 Berlin (DE)**
• **Szollmann, Tom**
  **12101 Berlin (DE)**

(54) **ADVANCED CHANNEL ESTIMATION FOR OTFS: SMOOTHNESS OPTIMIZED WITH NOISE AN MODE AWARENESS**

(57)   Method for channel estimation in a wireless communication system using an orthogonal time frequency and space (OTFS) modulation with at least one pilot-symbol placed in the delay-Doppler domain, comprising
a) performing at least part of a 2D discrete symplectic Fourier transform (DSFT) to map the time-frequency symbols of a received frame to a pilot region and thereby perform an initial LS CMDE in the delay-Doppler domain,
b) minimize the energy of the second order derivatives of the regularization matrix H in the time frequency domain, subject to the condition that the respective channel main diagonal estimation of the minimized regularization matrix transformed to the pilot region of delay doppler-Domain does not deviate with respect to an Euclidean norm from the initial LSCMD estimate by more than a relaxation threshold $\delta$ lager or equal to zero, i.e.

$$\min_{\boldsymbol{H}^{\text{RHP,TF}}} \sum_{\overline{m}=0}^{M-1} \sum_{,\overline{n}=0}^{N-1} \left\| \boldsymbol{G}_{\boldsymbol{H}^{\text{RHP,TF}}}^{\alpha,\beta}(\overline{m},\overline{n}) \right\|_{\text{F}}^{2}$$

subject to

$$\frac{1}{2} \left\| \boldsymbol{CQ}vec\{\boldsymbol{H}^{\text{RHP,TF}}\} - \widehat{\boldsymbol{h}}^{LS,\ DD} \right\|_{2}^{2} \leq \delta,$$

EP 4 525 384 A1

Fig. 5

**Description**

The invention relates to a method and device to improve the channel estimation in wireless communication, especially for communication using a modulation scheme orthogonal time - frequency and space modulation (OTFS)

The future of mobility relies on highly automated and connected vehicles, imposing stringent requirements on the communication quality, especially for ultra-reliable low-latency communication (URLLC) across diverse scenarios. The wireless channels is considered to be doubly dispersive, characterized by variations in both time and frequency. This introduces exceptional challenges for the communication system to overcome. It is evident that existing systems struggle to adequately balance these requirements. Both 4th generation wireless system (4G) and 5th generation wireless system (5G) employ orthogonal frequency-division multiplexing modulation (OFDM) as a radio access technology, which exhibits notable performance degradation in high mobility scenarios. The exploration of new transceiver structures for multicarrier systems plays a central role in meeting the stringent automotive requirements.

The emerging modulation scheme orthogonal time-frequency and space modulation (OTFS) shows promise in enabling high reliability for high mobility scenarios. OTFS utilizes linear precoding in the delay-Doppler (DD) domain for signaling, resulting in high time-frequency (TF) diversity and other benefits. Unlike OTFS, other approaches only apply linear precoding to data symbols in the TF domain, neglecting the pilot signaling. Accurate channel state information (CSI) knowledge and suitable equalizers are necessary for achieving high TF diversity and robustness. These requirements are essential for utilizing linear precoding in automotive transceivers, ensuring low complexity and suitability for URLLC.

## I. INTRODUCTION

One of the most promising features of orthogonal time frequency and space modulation (OTFS) modulation is the direct resolution of the different channel paths in the delay- Doppler (DD) domain. Therefore, it has the potential to provide more accurate channel estimation and reduced signaling overhead when using sparsity promoting estimation techniques like compressed sensing. This is particularly interesting for high-speed communication scenarios, involving, e.g., vehicle communications. Safety-relevant vehicle communications are especially challenging as they require a reliable exchange of short-frame messages. This implies that on the one hand, one has to meet strict quality of service requirements and, on the other hand, one needs to deal with highly linear time-varying (LTV) channels. In these scenarios, the channel needs to be estimated and equalized on a per frame basis.

. In OTFS, data and pilot symbols are placed in the DD domain and spread over the TF domain. This increases the achievable accuracy in estimating linear time-varying channels.

Considering the full OTFS transceiver chain, including pulse shaping filters, the original sparsity in the channel diminishes when using the discrete symplectic Fourier transform (DSFT). Depending on the LTV channel both fractional Doppler shifts and delay shifts are present when represented in the discrete DD domain. The reason for this is that the fractional shifts are not compatible with the periodicity assumption of the DSFT. This causes significant leakage and substantially reduces the effective sparsity.

So far, most research has focused on iterative detection methods based on message passing. In some proposals, the channel is assumed to be sparse in the DD domain.

Other solutions take fractional Doppler shifts but not fractional delay shifts into account. In one approach, enlarged guard regions are used to deal with fractional Doppler shifts. In general, compressed sensing or even super resolution are possible approaches to cope with leakage effects and to enhance sparsity. However, algorithms in this context usually require high computing power, are complex, and time-costly. Thus, there is a need for low-complexity practical schemes of leakage suppression without resorting to $\ell 1$-norm minimization or iterative optimization methods.

## II. PROBLEM

The channel estimation approaches known are still unsatisfactory and needs further improvement to have a more reliable and faster as well as more accurate channel estimation.

The problem is solved by a method comprising the features of claim 1 and a device with the features of claim X. Preferential embodiments are disclosed in the dependent claims.

## III BASIC IDEA OF THE INVENTION

It is proposed to use a pilot-aided channel estimation and exploiting smoothness regularization in the time frequency domain to suppress leakage observed in the DD domain by minimizing the energy of the second order derivatives of the regularizer matrix in the TF domain. The suggested scheme is named OTFS regularized Hessian estimation (ORHE). A discrete Hessian Matrix is used to perform the second derivative.

The scheme comprises

a) performing an initial least square channel main diagonal (LS CMD) estimation (LS CMDE) in the delay-Doppler domain (DD domain) for the pilot region, and

b) perform a smoothness regularization in the time-frequency domain (TF domain) by minimizing the energy of the second order derivatives in the time frequency domain.

To perform the LS CMDE the TF Symbols are mapped by a 2D-discrete symplectic Fourier transform (DSFT). This is accomplished with a sub-matrix that projects the received intensity in the TF frame to a pilot region in the DD domain. I.e. the intensity attributed to the pilot in the received TF frame is transferred to least square channel main diagonal estimation (LS CMDE) in the DD domain.

In order to explain the invention in detail, first the background, the basic computations and assumptions are presented.

A. Notational Remarks

Scalars are represented by $x$, a column vector by $x$ and their i-th element by $x_i$. Matrices and 2D-arrays are denoted by $\boldsymbol{X}$ and their (i, $\ell$)-th element by $x_{i,\ell}$. Superscripts ()* and ()$^H$ denote the complex conjugate and the Hermitian transpose, respectively. Let $*$ denote the non-cyclic 2D convolution which only returns the valid part. The column-wise vectorization operator, the absolute value, the Euclidean norm, the infinity norm, and the Frobenius norm is denoted as $vec$ $\{\cdot\}, |\cdot|, \|\cdot\|_2, \|\cdot\|_\infty$, and $\|\cdot\|_F$, respectively. The Frobenius norm is the square root of the sum of the squared absolute values of the matrix elements. One denotes $\delta(\cdot)$ as the Dirac distribution, Q as the Hadamard product, E{ } as expectation operation, and $j^2 = -1$. One denotes the indices of down-converted received signal by ($\bar{\phantom{x}}$) and integrals are from $-\infty$ to $\infty$ unless stated otherwise.

B. SYSTEM MODEL

The system model for pulse-shaped multicarrier schemes is based on a time-continuous Gabor (Weyl-Heisenberg) signaling model from which one derives a discrete model. One defines the Gabor grid as $\mathcal{I} \subseteq \mathbb{Z}_M \times \mathbb{Z}_N$ with $\mathbb{Z}_M = \{0, ..., M-1\}, \mathbb{Z}_N = \{0, ..., N-1\}$ and frequency- and time step-sizes $T > 0$ and $F > 0$, respectively. Note that one assumes the grid to be cyclic. The frame duration is then the product of TN and total bandwidth $B = FM$. One further uses $\mathcal{I}^\circ \subseteq \mathbb{Z}_M \times \mathbb{Z}_N$ o denote the adjoint grid corresponding to the DD domain. One synthesizes the transmit signals $f_{T_x}$ ($t$) with the pulse complex- valued pulse y(t) as

$$f_{T_x}(t) := \sum_{(m,n)\in\mathcal{I}} x{m,n}\, \gamma(t - nT)e^{2\pi jmFt} , \qquad (1)$$

where $j = \sqrt{-1}$ and $\boldsymbol{X} = \{x{m,n}\}_{(m,n)\in\mathcal{I}}$ is the 2D-array of TF-resource coefficients containing the TF spread symbols. The Gabor synthesis in (1) is also referred to as Heisenberg transform. All symbols are $\boldsymbol{X^{DD}} = \{x_{k,l}^{DD}\}_{(k,l)\in\mathcal{I}^\circ}$ placed in the DD and spread over the TF domain by applying the DSFT, i.e.,

$$x_{m,n} = [\mathcal{F}_S \boldsymbol{X^{DD}}]_{m,n} = \frac{1}{\sqrt{NM}}\sum_{(k,l)\in\mathcal{I}^\circ} x_{k,l}^{\mathrm{DD}}\, e^{-j2\pi\left(\frac{nl}{N}-\frac{mk}{M}\right)} \qquad (2)$$

$$x_{k,l}^{\mathrm{DD}} = [\mathcal{F}_S \boldsymbol{X}]_{k,l}\, \frac{1}{\sqrt{NM}}\sum_{(m,n)\in\mathcal{I}} x_{m,n}\, e^{-j2\pi\left(\frac{nl}{N}-\frac{mk}{M}\right)} \qquad (3)$$

Where $\mathcal{F}_S$ denotes the DSFT and is also called OTFS transform. Note that $\mathcal{F}_S$ is its own inverse due to the flipping of the axes, opposite exponential sign, and normalization.

The doubly-dispersive channel model in the continuous DD domain with a total of R multipaths can be expressed as

$$\eta(\tau, v) := \sum_{r \in \mathcal{J}} \eta_r \delta(\tau - \tau_r)\delta(v - v_r) \qquad (4)$$

where the index set $\mathcal{J} = \{1, \dots, R\}$ associated with each path corresponds, respectively, to the delay shifts $\tau_r$, the Doppler shifts $v_r$, and the complex-valued attenuation factors $\eta_r$. The assumption of the channel being under-spread implies that all tuples $(\tau_r, v_r)$ are contained within a small region referred to as spreading region $\mathcal{U} \subset [0, \tau_{max}] \times [-v_{max}, v_{max}]$ such that $|\mathcal{U}| = 2\tau_{max}v_{max} \ll 1$, where $\tau_{max}$ and $v_{max}$ correspond to the largest delay spread and largest Doppler spread, respectively. In the time domain, the channel in (4) acts on the transmit signal in (1) as a time-varying convolution. Hence the received signal yields

$$f_{R_x}(t) := \sum_{r \in \mathcal{J}} \eta_r f_{T_x}(t - \tau_r)e^{2\pi j v_r t} .\qquad (5)$$

The receiver analyzes the signal using another Gabor filterbank. It is assumed that the receiver uses the same Gabor grid as the transmitter and can only differ in the choice of the analysis pulse g(t). Then, one can describe the measured 2D-array of the TF symbols

$$Y = \{y_{\bar{m},\bar{n}}\}_{(\bar{m},\bar{n}) \in \mathcal{J}}$$

by

$$y_{\bar{m},\bar{n}} = \int g^*(t - \bar{n}T)e^{-2\pi j \bar{m}Ft}f_{R_x}(t)\, dt + w_{\bar{m},\bar{n}} \qquad (6)$$

$$y_{\bar{m},\bar{n}}(\tau, v) = \iiint g^*(t - \bar{n}T)e^{j2\pi(v-\bar{m}F)}\eta(\tau, v)f_{T_x}(t - \tau)\, d\tau dv dt + w_{\bar{m},\bar{n}} \qquad (7)$$

$$y_{\bar{m},\bar{n}}(\tau, v) = \sum_{r \in \mathcal{J}} \eta_r \int g^*(t - \bar{n}T)e^{2\pi j t(v_r-\bar{m}F)}f_{T_x}(t - \tau_r)\, dt + w_{\bar{m},\bar{n}} \qquad (8)$$

with

$$\int g^*(t - \bar{n}T)e^{2\pi j t(v_r-\bar{m}F)}f_{T_x}(t - \tau_r)\, dt =: y_{\bar{m},\bar{n}}(\tau_r, v_r) \qquad (9)$$

Where

$$Y(\tau, v) = \{y_{\bar{m},\bar{n}}(\tau, v)\}_{(\bar{m},\bar{n}) \in \mathcal{J}}$$

is the 2D-array of the receiver response to a single unit amplitude scatterer where $\tau$ is the delay shift, $v$ is the Doppler shift, and $W = \{w_{\bar{m},\bar{n}}\}_{(\bar{m},\bar{n}) \in \mathcal{J}}$ is the 2D-array of the noise. In this system model, one assumes that the measured noise samples $w_{\bar{m},\bar{n}}$ are uncorrelated zero-mean random variables with variance $\sigma 2 > 0$. The unit receiver response in (6) further evaluates to

$$y_{\bar{m},\bar{n}}(\tau, v) = \int g^*(t - \bar{n}T)e^{2\pi j t(v_r-\bar{m}F)} \times \sum_{(m,n) \in \mathcal{J}} \eta_r x_{m,n} \gamma(t - \tau - nT)e^{2\pi j mF(t-\tau)}dt \qquad (10)$$

$$y_{\bar{m},\bar{n}}(\tau, v) = \sum_{(m,n) \in \mathcal{J}} x_{m,n} \int g^*(t - \bar{n}T)\gamma(t - \tau - nT)e^{2\pi j(tv-\bar{m}Ft+mFt-mF\tau)}\, dt \qquad (11)$$

$$\phi_{(m,n),(\overline{m},\overline{n})}(\tau,v) := \int g^*(t - \overline{n}T)\gamma(t - \tau - nT)e^{2\pi j(tv - \overline{m}Ft + mFt - mF\tau)} \, dt \tag{12}$$

where $\phi(\tau,v) = \{\phi_{(m,n),(\overline{m},\overline{n})}(\tau,v)\}_{(m,n),(\overline{m},\overline{n})\in\mathcal{J}}$ is the effective channel matrix corresponding to a single unit amplitude scatterer. It can be written as

$$\phi_{(m,n),(\overline{m},\overline{n})}(\tau,v) = e^{2\pi j(\overline{n}T\,v - \overline{m}F\,\tau \, -\Delta mF\,\tau + \overline{n}T\,\Delta mF\,)} \times \int g^*(t)\gamma(t - \tau - \Delta nT)e^{2\pi jt(v + \Delta mF\,)} \, dt, \tag{13}$$

where $\Delta n = n - \overline{n}$ and $\Delta m = m - \overline{m}$ for convenience. Observe that the integral in (13) corresponds to the *cross ambiguity function* of $\gamma$ and $g$ which one defines as

$$A_{\gamma,g}(\tau,v) := \int g^*(t)\gamma(t - \tau)e^{2\pi jvt}dt\,. \tag{14}$$

The 2D-array of channel main diagonal (CMD) coefficients $H(\tau,v) = \{h_{\overline{m},\overline{n}}(\tau,v)\}_{(\overline{m},\overline{n})\in\mathcal{J}}$ with respect to a single unit scatterer for $\Delta m = 0$ and $\Delta n = 0$ is given as

$$h_{\overline{m},\overline{n}}(\tau,v) = \phi_{(m,n),(\overline{m},\overline{n})}(\tau,v). \tag{15}$$

Due to the assumption of an under-spread channel, the diagonal elements of the effective channel matrix are dominant. This motivates the use of CMD estimation which is significantly less complex than maximum-likelihood estimation or iterative interference cancellation methods. Exact orthogonality of the pulses in the integral of (13) would imply that the effective channel matrix reduces to a diagonal matrix. This, however, cannot be achieved in pulse-shaped multicarrier systems independently of $(\tau, v)$ due to the intrinsic limitations of the *cross ambiguity function*. To cope with this, one separates the off-diagonal terms in (13) which cause the observed self-interference due to both inter-carrier and intersymbol interference. More specifically, one defines the selfinterference associated with a single unit amplitude scatterer as

$$z_{\overline{m},\overline{n}}(\tau,v) := \sum_{\substack{(m,n)\in\mathcal{J} \\ (m,n)\neq(\overline{m},\overline{n})}} x_{m,n}\phi_{(m,n),(\overline{m},\overline{n})}(\tau,v) \tag{16}$$

Note that the self-interference contains interference from both data and pilot symbols. Then, one can write (12) with (15) and (16) as

$$y_{\overline{m},\overline{n}}(\tau,v) = x_{\overline{m},\overline{n}}h_{\overline{m},\overline{n}}(\tau,v) + z_{\overline{m},\overline{n}}(\tau,v). \tag{17}$$

Finally, one can write the input-output relation in (6) with (12) as

$$Y = X \odot \sum_{r\in J}\eta_r H(\tau_r, v_r) + \sum_{r\in J}\eta_r Z(\tau_r, v_r) + W, \tag{18}$$

$$= X \odot H + Z + W, \tag{19}$$

where $H = \{h_{\overline{m},\overline{n}}\}_{(\overline{m},\overline{n})\in\mathcal{J}}$ and $Z = \{z_{\overline{m},\overline{n}}\}_{(\overline{m},\overline{n})\in\mathcal{J}}$ are the 2D-arrays of the CMD and the 2D-array of self-interference, respectively. One assumes that the long-term expectation of the power over the normalized and zero-mean TF symbols gives $\mathbb{E}\{|x_{m,n}|^2\} = 1$. Normalization is assumed to simplify signal processing and analysis, while zero-mean is employed to prevent DC offset. Typically, data symbols in most modulation alphabets are designed to be zero-mean, while pilot symbols achieve this by varying symbol phases known to the receiver. Therefore, one models the distribution of $z_{\overline{m},\overline{n}}$ as other random variables with uncorrelated zero-mean noise and with (unknown) variance

$\sigma_z^2 > 0$, which does not depend on $\bar{m}$ and $\bar{n}$. Applying the DSFT to (19), one transfers the relation to the DD domain

$$Y^{\mathrm{DD}} = X^{\mathrm{DD}} \circledast H^{\mathrm{DD}} + Z^{\mathrm{DD}} + W^{\mathrm{DD}}, \qquad (20)$$

where $[X \circledast H]_{\bar{k},\bar{\ell}} := \sum_{n,m} X_{n,m} H_{\bar{\ell}-n,\bar{k}-m}$ denotes the 2D circular convolution of 2D-arrays. In the DD domain, $H^{\mathrm{DD}}$, $Z^{\mathrm{DD}}$, and $W^{\mathrm{DD}}$ are 2D-arrays of the channel main diagonal, the self-interference, and additive white Gaussian noise (AWGN), respectively. Note that $Z^{\mathrm{DD}}$ includes both inter-Doppler and inter-delay interference. It is common to assume that the synthesis pulse $\gamma$, analysis pulse g, as well as T and F are adapted to U such that the self-interference is minimized, i.e.,

$$\| Z^{\mathrm{DD}} \|_2^2 \ll \| X^{\mathrm{DD}} \circledast H^{\mathrm{DD}} \|_2^2.$$

One models the distribution of $Z^{\mathrm{DD}}$ as an additive white noise process $Z_{\bar{k},l}^{\mathrm{DD}} \sim \mathcal{N}(0, \sigma_z^2)$ with (unknown) variance $\sigma_z^2 > 0$ which is regarded as additional noise. In (15), the channel represents a 2D convolution of 2D-arrays due to using the DSFT. Since the channel is considered to be under-spread, one knows that the 2D convolution kernel is supported within a region in the DD domain which one refers to as *pilot region* in Section D.

Equalization can then be done using a one-tap minimum mean square error equalizer (MMSE) in TF domain, yielding the equalized frame in TF as

$$\hat{x}_{\bar{m},\bar{n}} = \hat{h}_{\bar{m},\bar{n}}^* y_{\bar{m},\bar{n}} \left( |\hat{h}_{\bar{m},\bar{n}}|^2 + \lambda \right)^{-1}, \qquad (21)$$

where $\lambda > 0$ is the noise variance parameter.

## C. LEAKAGE EFFECT ON DISCRETE DD CHANNEL

Computing the 2D-array of the CMD for a $(\tau, v)$-scatterer in DD domain by applying the 2D-DSFT to $h_{\bar{m},n}$ in (10) gives

$$h_{\bar{k},\bar{l}}^{\mathrm{DD}}(\tau, v) = \sum_{(\bar{m},\bar{n}) \in \mathcal{J}} h_{\bar{m},\bar{n}}(\tau, v) e^{-2\pi j \left( \frac{\bar{m}\bar{k}}{M} - \frac{\bar{n}\bar{l}}{N} \right)}, \qquad (22)$$

$$= A_{\gamma,g}(\tau, v) \sum_{\bar{n}=0}^{N-1} e^{2\pi j \frac{\bar{n}(\bar{l}+NZv)}{N}} \sum_{\bar{n}=0}^{N-1} e^{-2\pi j \frac{\bar{m}(\bar{k}+MF\tau)}{M}}, \qquad (23)$$

$$= A_{\gamma,g}(\tau, v) D_N \left( \frac{\bar{l}+NZv}{N} \right) D_M \left( \frac{-\bar{k}-MF\tau}{M} \right), \qquad (24)$$

where $D_K$ corresponds to the *Dirichlet kernel* for an integer $K > 0$ which is defned to be

$$D_K(t) := \sum_{k=0}^{K-1} e^{2\pi jkt} = \begin{cases} K, & \text{if } t \epsilon \mathbb{Z} \\ e^{\pi j(k-1)t} \frac{\sin(\pi Kt)}{\sin(\pi t)}, & \text{otherwise.} \end{cases} \qquad (25)$$

Note that the length and bandwidth of the bi-orthogonal synthesis and analysis pulses are designed to be proportional to the spacing of the Gabor grid. In combination with the under-spread assumption, one observes that $A_{g,\gamma}(\tau_p, v_p) \approx A_{g,\gamma}(0, 0) = 1$. Consequently, the impact of the cross ambiguity function on the observed leakage in (15) is small.

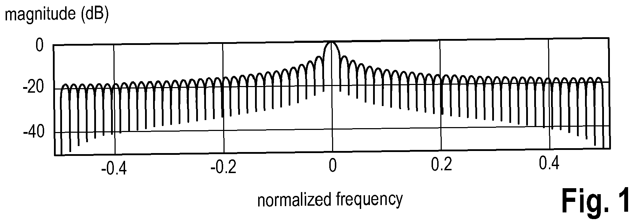

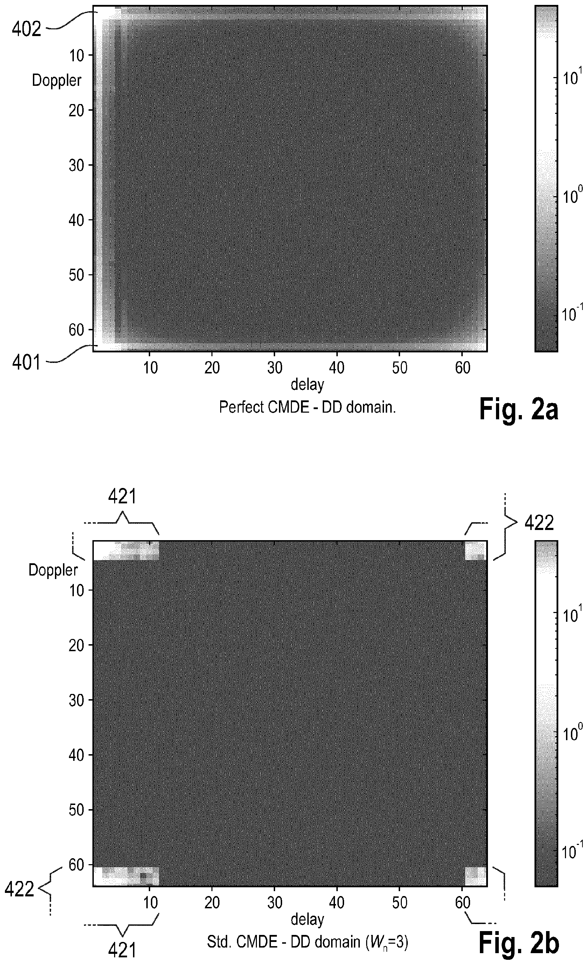

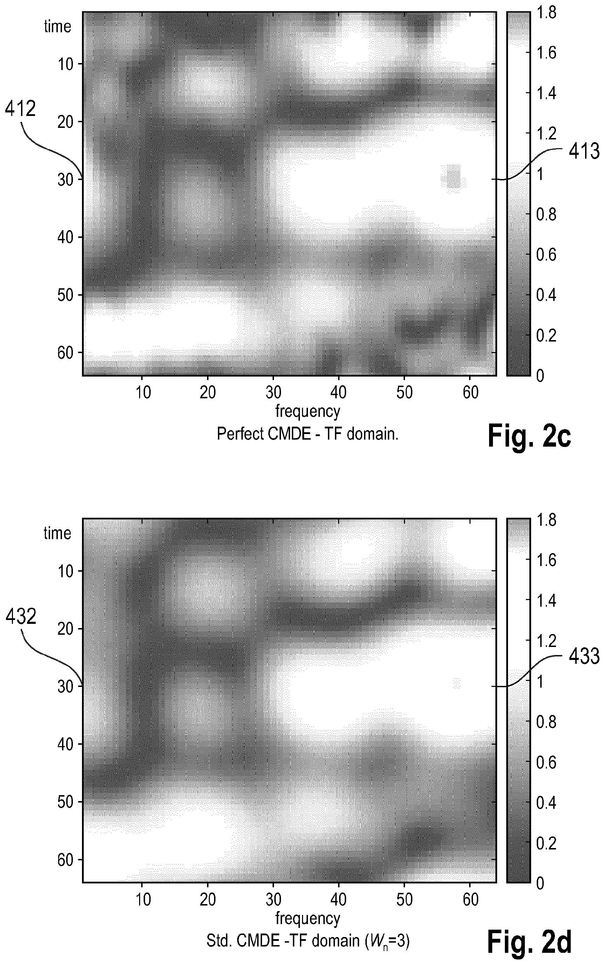

Fig. 1 illustrates the decay of the *Dirichlet kernel* for K = 64. Observe that the 2D-array $H(\tau, v)$ is only sparse if $MF\tau$ and $NTv$ are both integers. Otherwise, it has many large entries due to the poor localization of the Dirichlet kernel, as shown in Fig. 1, which is commonly referred to as *leakage.* Recall that the implicit assumption behind the DSFT is that the underlying samples stem from a band-limited periodic function, which is the reason for using a (block) cyclic prefix. However, $\boldsymbol{h}(\tau, v)$ is not cyclic and therefore the received frame $\boldsymbol{y}$ is discontinuous at the boundaries when interpreted as a periodic function. This behavior can be seen when comparing the frame borders of perfect with standard CMDE in Fig. 2a and 2d, respectively. It can be observed that the standard CMDE reconstructs a periodic 2D-array in the TF domain. In addition, the extraction of the pilot region applied in the DD domain acts upon $\boldsymbol{Y}$ as an ideal lowpass filter, which is known to cause significant oscillations near discontinuities. This behavior is clearly visible for standard (LS) CMDE in Fig. 2d.

As mentioned above, to some extent, the choice of the 2D-DSFT for orthogonal precoding is motivated by equations (12) and (19), which show that

$$(m,n) \rightarrow h_{\overline{m},\overline{n}} = \sum_{r \in \mathcal{J}} \eta_r e^{2\pi j(\overline{n}Tv_r - \overline{m}F\tau_r)} \int g^*(t)\gamma(t-\tau)e^{2\pi j v_r t}dt \qquad (26)$$

are the samples of a low-frequency 2D trigonometric polynomial which corresponds to Dirac pulses in the continuous DD domain.

## D. STRUCTURE OF THE OTFS FRAME

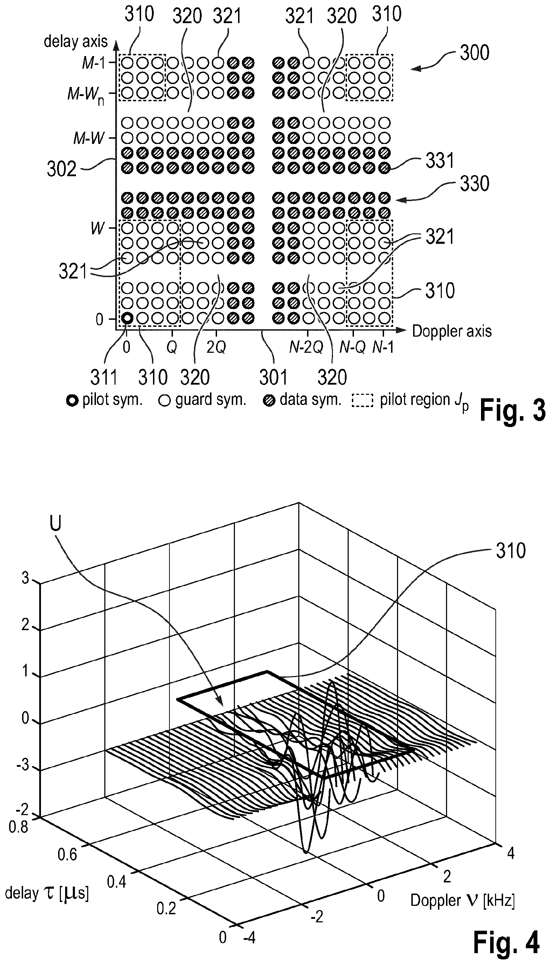

All symbols are placed in the DD domain including the pilot signaling. One divides the frame into three regions, which are allocated according to the expected long-term expectation of the channel described by $U$. The regions are specifed by $Q$ in Doppler domain and $W$ and $W_n$ both in delay domain and are depicted in Fig. 3. Unlike Doppler shifts, delays are distributed asymmetrically, i.e., with sufficient synchronization effective delays are usually non-negative. However, leakage smears delays such that one can also observe negative delays which cannot be taken into accounted by $W$. Therefore, one introduces the parameter $W_n$. Doppler shifts are distributed symmetrically and one considers the smeared Doppler shifts by simply increasing Q. Recall that one has cyclic indices and therefore negative indices are wrapped.

Fig. 3 depicts a schematic frame 300 in the delay-Doppler domain. It consists of three regions:

*1) Pilot region.* This pilot region 310 is a rectangular box given by

$$\mathcal{J}_P = \{-W_n, \dots, W\} \times \{-Q, \dots, Q\} \subset \mathcal{J}^{\circ} \qquad (27)$$

with a size of $P_S = (W + W_n + 1) \times (2Q + 1)$ symbols and consists of a single pilot symbol 311 at the origin, i.e., $X_{0,0} = \sqrt{(4Q+1)(2W+1)} = P_e$ ($P_e$ is the energy of the pilot) and zeros elsewhere. The reasoning is that the main diagonal acts as a 2D-convolution with a kernel of approximate support size $(W + W_n + 1) \times (2Q + 1)$, where $W$ and $Q$ are selected to be larger than the expected $\tau_{max}MF$ and $v_{max}NT$, respectively. The kernel of the channel main diagonal can be extracted as detailed in (30).

*2) Guard region.*
The *guard region 320*

$$\mathcal{J}_g = \{-W, \dots, W\} \times \{-2Q, \dots, 2Q\} \setminus \mathcal{J}_{P,} \qquad (28)$$

consists entirely of zeros 321 and avoids interference between pilot and data symbols 331 outside the black dashed frame 340.

*3) Data region.*

The rest of the frame 300, the data region 330, is filled data symbols 331 $\mathcal{J}_d = \mathcal{J} \setminus (\mathcal{J}_P \cup \mathcal{J}_g)$, usually coming from a certain modulation alphabet, which are used for the data payload and have unit amplitude.

## E. CHANNEL ESTIMATION AND SMOOTHNESS REGULARIZATION

The invention proposes a channel estimation and smoothness regularization:

*a. LS CMD estimator for received OTFS frame*

The CMD coefficients can be estimated from the pilot region in the discrete DD domain as pointed out be the inventor et al, "Pulse-Shaped OTFS over Doubly-Dispersive Channels: One-Tap vs. Full LMMSE Equalizers," in 2021 IEEE Int. Conf. on Commun. Workshops (ICC Workshops), pp. 1-6, 2021 referred to as publication A. One defines a sub-matrix $C \in \mathbb{C}^{P_S \times NM}$ of the 2D-DSFT to map the TF symbols to the DD coefficients on the pilot region as

$$c_{(\bar{\ell},\bar{k}),(\bar{m},\bar{n})} \;=\; \frac{1}{\sqrt{NM}} \; e^{-j2\pi\left(\frac{\bar{n}\bar{\ell}}{N}-\frac{\bar{m}\bar{k}}{M}\right)}, \qquad (29)$$

where $(\bar{m},\bar{n}) \in \mathcal{I}$ and $(\bar{l},\bar{k}) \in \mathcal{I}_P$. One gets the least-Square (LS) CMD estimator in the DD domain $\hat{h}^{LS,DD} \in C^{PS}$ by simply execrating the kernel of the pilot region from received OTFS frame as

$$\hat{h}^{LS,\ DD} = \frac{C y^{\mathrm{TF}}}{P_e} \, C^{P_S} \qquad (30)$$

*b. Proposed smoothness regularized channel estimator*

*The invention* proposes a novel scheme to suppress the leakage effect for CMD estimation. The leakage is an inherent problem of the DSFT and is unavoidable if the pilot is subject to OTFS spreading. To mitigate this effect, it is proposed to combine a LS CMDE in DD with a regularizer on the TF coefficients which minimizes the energy of the second order derivatives. To justify this, it is pointed out that in (26) the channel in the continuous DD domain consists of samples which are 2D trigonometric polynomials having low-frequency meaning that they are relatively slow changing compared to the frame size. Thus the coefficients of a regularizer matrix in the time frequency domain should "span" a smooth surface. The proposed channel estimation scheme follows thus proposes to smooth the regularizer matrix by minimizing the energy of the second derivative.

Proposed is a method for channel estimation in a wireless communication system using an orthogonal time frequency and space (OTFS) modulation with at least one pilot-symbol placed in the delay-Doppler (DD) domain, comprising

a) performing at least part of a 2D discrete symplectic Fourier transform (DSFT) to map the time-frequency symbols of a received frame to a pilot region $P_s$ and thereby perform an initial least-square channel main diagonal estimation LS CMDE in the delay-Doppler domain.

b) minimize the energy of the second order derivatives of the coefficient matrix H representing the channel main diagonal estimate in the time frequency domain, wherein the minimized channel main diagonal estimate is named OTFS regularized Hessian estimation (OHRE), wherein the minimization subject to the condition that the minimized channel main diagonal estimation transformed to the pilot region of the delay Doppler domain does not deviate with respect to an Euclidean norm from the initial least square main diagonal estimation (LS CMDE) estimate by more than a relaxation threshold $\delta$, being lager or equal to zero

The minimum of the of the Hessian matrix is preferably determined using a Frobenius norm.

The second order derivatives can be achieved by a non-cyclic convolutions with kernels of size 3x3.

In order to minimize errors at the frame borders, it is proposed to pad the regularization matrix H. H is extended on each side by one row and column respectively, i.e. in total by two rows and two columns.

Thus in one embodiment step b) comprises padding the coefficient matrix H for a frame of the dimension M·N to the size (M+2)·(N+2) and minimizing the padded Hessian matrix $G_H$ of the padded matrix $H^{RHP,TF}$ of size (M+2)(N+2) in the time-frequency domain using a Frobenius norm with the constraint, that the Euclidean norm of the difference of the estimated regularized Hessian Channel Main Diagonal in the pilot region of the delay-Doppler domain of the truncated minimized padded regularizer matrix $H^{RHP,TF}$ and of the initial least square channel main diagonal estimation of the received frame in the pilot region of the delay Doppler domain is smaller than the relaxation parameter $\delta$ lager or equal to zero.

*Second order discrete derivatives:*

The second order discrete derivatives using non-cyclic convolutions with kernels of the size $3 \times 3$ is used. The 2D convolution of an array $\boldsymbol{E} = \{e_{\bar{m},\bar{n}}\}$ of size $(M + 2) \times (N + 2)$ with a $3 \times 3$ kernel $\Phi = \{\Phi_{\bar{m},\bar{n}}\}$ is the array given as

$$[E * \Phi]_{\bar{m},\bar{n}} = \sum_{l=-1}^{1} \sum_{k=-1}^{1} e_{\bar{m}-\bar{l}+1,\bar{n}-\bar{k}+1} \phi_{\bar{l}+1,\bar{k}+1} \tag{31}$$

$$\bar{m} = 0,\ldots,M-1, \quad \bar{n} = 0,\ldots,N-1, \tag{32}$$

of size $M \times N$, i.e., one considers the valid part of the convolution. One defines the kernels as

$$\Phi_{\text{tt}} = \begin{bmatrix} 0 & 0 & 0 \\ -1 & 2 & -1 \\ 0 & 0 & 0 \end{bmatrix} \tag{33a}$$

$$\Phi_{\text{ff}} = \begin{bmatrix} 0 & -1 & 0 \\ 0 & 2 & 0 \\ 0 & -1 & 0 \end{bmatrix} \tag{33b}$$

$$\Phi_{\text{tf}} = \begin{bmatrix} -1 & 0 & 0 \\ 0 & -1 & 0 \\ 0 & 0 & 0 \end{bmatrix}, \tag{33c}$$

where $\Phi_{\text{ff}}$, $\Phi_{\text{tt}}$ and $\Phi_{\text{tf}}$ correspond to the second order partial derivatives with respect to frequency, time and mixed dimensions, respectively. With this in hand, one defines the discrete, preferably weighted Hessian with $\bar{m} = 0,\ldots,M-1, \bar{n} = 0,\ldots,N-1$ as

$$G_E^{\alpha,\beta}(\bar{m},\bar{n}) = \begin{bmatrix} \alpha^2 [E * \Phi_{\text{ff}}]_{\bar{m},\bar{n}} & \alpha\beta [E * \Phi_{\text{tf}}]_{\bar{m},\bar{n}} \\ \alpha\beta [E * \Phi_{\text{tf}}]_{\bar{m},\bar{n}} & \beta^2 [E * \Phi_{\text{tt}}]_{\bar{m},\bar{n}} \end{bmatrix}, \tag{34}$$

where the scaling parameters $\alpha,\beta > 0$ assist in compensating channel modes in more sophisticated embodiments of the invention. In a basic scheme the weight can be chosen to be unity $\alpha,\beta = 1$.

Thus according to one embodiment without awareness of the cahnnel mode the second order derivatives of the Hessian matix for the padded coefficient matirx $H^{\text{RHP,TF}}$ is given by:

$$G_{H^{\text{RHP,TF}}}(\bar{m},\bar{n}) = \begin{bmatrix} [H^{\text{RHP,TF}} * \Phi_{\text{ff}}]_{\bar{m},\bar{n}} & [H^{\text{RHP,TF}} * \Phi_{\text{tf}}]_{\bar{m},\bar{n}} \\ [H^{\text{RHP,TF}} * \Phi_{\text{tf}}]_{\bar{m},\bar{n}} & [H^{\text{RHP,TF}} * \Phi_{\text{tt}}]_{\bar{m},\bar{n}} \end{bmatrix},$$

with

$$\bar{m} = 0,\ldots,M-1, \quad \bar{n} = 0,\ldots,N-1$$

wherein

$$[H^{\text{RHP,TF}} * \Phi_{\text{xx}}]_{\bar{m},\bar{n}} = \sum_{l=-1}^{1} \sum_{k=-1}^{1} h_{\bar{m}-\bar{l}+1,\bar{n}-\bar{k}+1} \phi_{\bar{l}+1,\bar{k}+1}$$

with $\bar{m} = 0,\ldots,M-1, \bar{n} = 0,\ldots,N-1$, is the non-cyclic convolution of the padded coefficient matrix $H^{\text{RHP,TF}} = \{h_{\bar{m},\bar{n}}\}$ having the size $(M+2) \times (N+2)$ with kernels of the size $3 \times 3$ by

$$\boldsymbol{\Phi}_{\text{tt}} = \begin{bmatrix} 0 & 0 & 0 \\ -1 & 2 & -1 \\ 0 & 0 & 0 \end{bmatrix}, \; \boldsymbol{\Phi}_{\text{ff}} = \begin{bmatrix} 0 & -1 & 0 \\ 0 & 2 & 0 \\ 0 & -1 & 0 \end{bmatrix}, \; \text{and} \; \boldsymbol{\Phi}_{\text{tf}} = \begin{bmatrix} -1 & 0 & 0 \\ 0 & -1 & 0 \\ 0 & 0 & 0 \end{bmatrix}.$$

As will be described in other advanced embodiments $\alpha, \beta > 0$ but unequal to 1 to allow to weight the smoothing depending on the delay-Doppler spreading region.

The proposed optimization problem thus uses a Hessian matrix, preferably a weighted Hessian matrix and a LS CMD estimate in DD domain to find the smoothed channel coefficients. Most preferable the smoothing is carried out on a padded TF grid, i.e. for a frame size of MN the matrix $\boldsymbol{H}^{\text{RHP,TF}} \in C^{(M+2)\times(N+2)}$ is minimized :

$$\min_{\boldsymbol{H}^{\text{RHP,TF}}} \sum_{\overline{m}=0}^{M-1} \sum_{,\overline{n}=0}^{N-1} \left\| \boldsymbol{G}_{\boldsymbol{H}^{\text{RHP,TF}}}^{\alpha,\beta} (\overline{m}, \overline{n}) \right\|_{\text{F}}^2 \tag{35a}$$

subject to

$$\frac{1}{2} \left\| \boldsymbol{CQ}vec\{\boldsymbol{H}^{\text{RHP,TF}}\} - \widehat{\boldsymbol{h}}^{LS, \; DD} \right\|_2^2 \leq \delta, \tag{35b}$$

where the scaling parameters $\alpha, \beta > 0$ are chosen to be $\alpha, \beta = 1$ in case no additional knowledge exists, an can otherwise assist in compensating channel modes and noise. One collects all variances and relaxes them by the relaxation parameter $\delta$. $\boldsymbol{Q} \in \mathbb{R}^{NM \times (N+2)(M+2)}$ with $l = 0...N+1$, $k = 0...M+1$ and in $= 0...N-1$, $\overline{\overline{n}} = 0...M-1$ is the diagonal matrix with entries $[\boldsymbol{Q}]_{(\overline{m},\overline{n})(k,l)} = 1$ if $\overline{n} = l+1$ and $\overline{m} = k+1$ and zeros otherwise. $\boldsymbol{Q}$ is basically cutting the padded borders of the smoothed channel estimate to the size NM. Finally, one gets the estimated regularized Hessian CMD by truncating the padded estimate $H^{RHP,TF}$, i.e.,

$$\widehat{\boldsymbol{h}}^{RH,TF} = \boldsymbol{Q}vec\{\boldsymbol{H}^{RHP,TF}\}. \tag{36}$$

By applying the sub-matrix $\boldsymbol{C} \in \mathbb{C}^{P_S \times NM}$ of the 2D-DSFT to the estimated regularized Hessian CMD for mapping the TF symbols to the DD coefficients in the pilot region one gets the transformed regularized Hessian CMD estimation or the regularized Hessian CMD estimate in the delay Doppler domain

$$\widehat{\boldsymbol{h}}^{RH,DD} = \boldsymbol{CQ}vec\{\boldsymbol{H}^{RHP,TF}\}. \tag{37}$$

The difference of this estimate in the delay-Doppler domain may deviate with respect to the Euclidean norm from the initial LS CMD estimation $\hat{h}^{L,S,DD}$not more than a relaxation parameter $\delta$, which is positive or zero.

*Awareness of the channel mode:*

Awareness of the channel mode addresses possible knowledge on the transmission channel, i.e.on possible delay shifts as well as on doppler shift. Both lead to delay and Doppler spreading. The area of this spreading in the delay Doppler domain caused by the 2D DSFT transform is connected to the scaling factors $\alpha$ and $\beta$. The scaling factors $\alpha$ and $\beta$ in (35a) control the preferred *channel mode* for the reconstruction, defined below. The intuition behind the weighting is briefly explained. The 2D-array of the CMD coefficients is in fact a sampling of an underlying differentiable function $h(f, t)$ as shown in (26). In essence, the mode of a channel is given by the ratio of its 2D-support in the DD domain. Suppose $h(f, t)$ is approximately supported on the rectangular box $[-\beta,\beta] \times [-\alpha,\alpha]$ in DD domain. Writing $h(\alpha f, \beta t) = u(f,t)$, one has that $u$ in DD domain is supported on the unit square $[-1,1] \times [-1,1]$ and its mode is balanced between delay domain and Doppler domain. For the optimization of equation (30a), it is beneficial to regularize on the Hessian of $u$ rather than $h$ as the regularizing term does not favor any particular direction. By standard calculus, one knows that the (continuous) Hessian matrix of $u$ at the point $(f, t) \in \mathbb{R}^2$ is given by

$$\begin{bmatrix} \alpha^2 \frac{\partial^2}{\partial f} h(\alpha f, \beta t) & \alpha\beta \frac{\partial^2}{\partial f \partial t} h(\alpha f, \beta t) \\ \alpha\beta \frac{\partial^2}{\partial f \partial t} h(\alpha f, \beta t) & \beta^2 \frac{\partial^2}{\partial f} h(\alpha f, \beta t) \end{bmatrix} \tag{38}$$

As one only has access to the (discrete) Hessian of **h**, one includes additional scaling into the optimization manually, obtaining the weighted discrete Hessian matrix as in eq. (34).

*In one embodiment thus* a weighted Hessian matrix having two weight factors $\alpha$ and $\beta$ is used to minimize the energy of the Hessian Matrix of the regularization matrix H.

Thus accrding to ine embodiment a weighted Hessian matrix

$$G_{H^{RHP,TF}}^{\alpha,\beta}(\bar{m},\bar{n}) = \begin{bmatrix} \alpha^2 [H^{RHP,TF} * \boldsymbol{\Phi}_{\mathsf{ff}}]_{\bar{m},\bar{n}} & \alpha\beta [H^{RHP,TF} * \boldsymbol{\Phi}_{\mathsf{tf}}]_{\bar{m},\bar{n}} \\ \alpha\beta [H^{RHP,TF} * \boldsymbol{\Phi}_{\mathsf{tf}}]_{\bar{m},\bar{n}} & \beta^2 [H^{RHP,TF} * \boldsymbol{\Phi}_{\mathsf{tt}}]_{\bar{m},\bar{n}} \end{bmatrix}$$ having two weight factors $\alpha$ and $\beta$ is used to minimize the energy of the Matrix H representing the transmission channel, wherein the weight factors $\alpha$ and $\beta$ rare chosen dependent on a delay doppler spread ratio, indicative of the the relative influence of the delay shifts versus the Doppler shift in the communication channels

In summary, given that the doubly-dispersive channel in (4) has maximum delay spread $\tau_{\mathsf{max}}$ and maximum Doppler spread $v_{max}$, a reasonable choice is to put $\alpha = v_{max}$ and $\beta = \tau_{max}$. Essentially, the parameters $\alpha$ and $\beta$ re-weight the delay and Doppler spread, and their selection depends on a priori knowledge of the distributions of the scatterers. If no a priori knowledge is available one can choose them to be equal, preferably equal to 1.

In many cases, these parameters can directly be estimated from the pilot region of the received frame. It can also be estimated based on knowledge of the communication environment: for example on one or more parameters like relative velocity to the other communication node and the condition of communication like non-line-of-sight (NLOS), line-of-sigth (LOS) or obstructed line-of-sight (OLOS), etc..

In one embodiment the weight factors are determined based on the delay-Doppler-mode of the transmission, determined by the delay-Doppler spread ratio.

In one preferred embodiment the delay-Doppler spread ratio is determined in the pilot region of the delay-Doppler domain from the result of the 2D discrete symplectic Fourier transform (DSFT) to map the time-frequency symbols of the received frame to a pilot region $P_s$.

*According to one embodiment the* delay-Doppler spread ration is determined according to one or more of the following group of determination schemes:

using a look-up table for the delay-Doppler spread ratio based on the current location of the receiver;
predicting the delay-Doppler spread ratio via a deep learning machine, wherein the machine is trained with previous transmission frames for which the spreading ratio was determined using a full linear minimum mean squared error estimationas described for example in publication A or an minimum mean squared error estimation;
receiving the delay-Doppler spread ratio from an external source
estimating the delay-Doppler spread ratio from the knowledge of communication environment ( whether a line of sight or non-line of sight or obstructed line of sight communication is carried out; the relative velocity of the communication nodes, wheather parameter etc.)

*Noise-awareness:*

*One can also improve the channel estimation when one takes into account the noise level.*

*In order to take the existence of noise into account one can relax the criterion for minimization, . i.e. the relaxation parameter $\delta$ lager or equal to zero can be set to a value representing the noise level. Thus* one relaxes the data fidelity term in (35b) to mitigate noisy measurements.

The relaxation parameter $\delta$ needs to match the expected error given as

$$\delta = \mathbb{E}\left\{ \left\| \boldsymbol{CQ}vec\{\boldsymbol{H}^{RHP,TF}\} - \widehat{\boldsymbol{h}}^{LS,DD} \right\|_2^2 \right\}. \tag{39}$$

One gets the LS CMD estimation as

$$\widehat{h}^{LS,DD} = Cvec\{\underbrace{Y}_{Y = X \odot h + Z + W}\} \tag{40}$$

$$= C(X \odot h + Z + W) \tag{41}$$

$$= \underbrace{h^{LS,DD}}_{h^{LS,DD} = CQvec\{H^{RHP,TF}\}} + \tilde{z}^{DD} + \widetilde{w}^{DD} \tag{42}$$

$$h^{LS,DD} = CQvec\{H^{RHP,TF}\} \tag{43}$$

where $\tilde{z}^{DD} = Cz$ and $\tilde{w}^{DD} = Cz$ are the projected interference and AWGN, respectively. The distribution of $\tilde{w}$ is simply $\mathcal{N}\left(0, \sigma^2 \frac{P_S}{NM}\right)$ (due to to projection of $C$) whereas knowledge of the true distribution of z and thus $\tilde{z}^{DD}$ require more detailed statistical assumptions on data and channel. Hence, one models the distribution of $z$ using another independent AWGN process with (unknown) variance $\sigma_z^2 > 0$ such that $\tilde{z} \sim \mathcal{N}\left(0, \sigma_z^2 \frac{P_S}{NM}\right)$. Observe that then each $\widehat{h}^{LS,DD}$ - $CQvec\{H^{RHP,TF}\}$ has zero-mean with variance and thus

$$\delta = \mathbb{E}\left\{\left\|CQvec\{H^{RHP,TF}\} - \widehat{h}^{LS,DD}\right\|_2^2\right\} = \mathbb{E}\left\{\left\|\tilde{z}^{DD}\right\|_2^2 + \left\|\widetilde{w}^{DD}\right\|_2^2\right\} \tag{44}$$

$$\delta = \frac{P_S}{NM}(\sigma_z^2 + \sigma^2) \tag{45xx}$$

In many situations the variances (both ( $\sigma_z^2 + \sigma^2$ ) are not known. However, $\delta$ can be estimated by determining the noise tuning parameter as proposed in [8] (see EQ (23)). Furthermore, it can be obtained from a lookup table and/or tuned based on experience, or even learned.

Thus according to one embodiment the noise is determined by one of the following schemes:

using a look up table dependent on the location
determining noise tuning parameter as in publication A
predicting the noise via an deep learning machine trained with previous transmission frames for which the noise level has been determined by learned prediction models
receiving the noise parameter from an external source.

*To speed up evaluation the problem can be transferred to a closed form solution by using* Tikhonov regularization. One can convert the constraint problem in eq. (35a) and (35b) into an unconstrained LS problems as

$$\min_{H^{RHP,TF}} \sum_{\bar{m}=0}^{M-1} \sum_{\bar{n}=0}^{N-1} \left\|G_{H^{RHP,TF}}^{\alpha,\beta}(\bar{m},\bar{n})\right\|_F^2 + \Omega\left\|CQvec\{H^{RHP,TF} - \widehat{h}^{LS,\ DD}\}\right\|_2^2, \tag{46}$$

where $\Omega$ is another regularization parameter taking into account the noise-awareness. Then, for each $\Omega$ a closed form solution exists which can be computed offline. One can rewrite (38) in a closed form solution in form

$$\left\|Avec\{H^{RHP,TF}\} - b\right\|_2^2. \tag{47}$$

It can be shown that:

$$\min_{H^{RHP,TF}} \sum_{\bar{m}=0}^{M-1} \sum_{\bar{n}=0}^{N-1} \left\|G_{H^{RHP,TF}}^{\alpha,\beta}(\bar{m},\bar{n})\right\|_F^2 + \Omega\left\|CQvec\{H^{RHP,TF}\} - \widehat{h}^{LS,\ DD}\right\|_2^2 \tag{46}$$

$$= \quad (**) \quad + \quad (*) \tag{46a}$$

can be transferred to the form of (47)

**Starting with (\*):** Let $d = \sqrt{\Omega}\widehat{h}^{LS,\ DD} \in \mathbb{C}^{P_S}$ and $B \in \mathbb{C}^{P_S \times (N+2)(M+2)}$ be the matrix with $P_S$ rows. Then, one gets:

$$*:= \Omega \left\| CQvec\{H^{\mathrm{RHP,TF}}\} - \widehat{h}^{LS,\ DD} \right\|_2^2 = \|Bh^{ex} - d\|_2^2 \qquad (47)$$

**Starting with (\*\*):** One defines the discrete weighted Hessian as

$$**:= \|(\alpha^2 \Phi_{\mathbf{ff}}) * h^{ex}\|_2^2 + 2\|(\alpha\beta \Phi_{\mathbf{tf}}) * h^{ex}\|_2^2 + \|(\beta^2 \Phi_{\mathbf{tt}}) * h^{ex}\|_2^2 \qquad (48)$$

with

$$C_1 := convmxt2(\alpha^2 \Phi_{\mathbf{ff}}) \in \mathbb{C}^{NM \times (N+2)(M+2)}, \qquad (49)$$

$$C_2 := convmxt2(\alpha\beta \Phi_{\mathbf{tf}}) \in \mathbb{C}^{NM \times (N+2)(M+2)}, \qquad (50)$$

$$C_3 := convmxt2(\beta^2 \Phi_{\mathbf{tt}}) \in \mathbb{C}^{NM \times (N+2)(M+2)}, \qquad (51)$$

where convmxt2 is a function that generates a 2D circular convolution matrix just like the identically named function in the MATLAB program of The MathWorks, Inc., Natick, Massachusetts, USA. Taking the derivations one can therefore rewrite:

$$(**) + (*) = \left\| C_1 vec\{H^{\mathrm{RHP,TF}}\} \right\|_2^2 + 2\left\| C_2 vec\{H^{\mathrm{RHP,TF}}\} \right\|_2^2 + \left\| C_3 vec\{H^{\mathrm{RHP,TF}}\} \right\|_2^2 + \|Bh^{ex} - d\|_2^2 \quad (52)$$

Finally one defines:

$$A := \begin{bmatrix} C_1 \\ C_2 \\ C_3 \\ B \end{bmatrix} \qquad (53)$$

with $A \in \mathbb{C}^{P_S + NM \times (N+2)(M+2)}$ and

$$b := \begin{bmatrix} 0 \\ 0 \\ 0 \\ d \end{bmatrix} \qquad (54)$$

with $b \in \mathbb{C}^{P_S + 3NM}$. Hence, the cost for solving the linear least square $A \in \mathbb{C}^{m \times n}$ and $b \in \mathbb{C}^{m}$ depends on an algorithm of the order of $\mathcal{O}(mn^2 + n^3)$.

According to one embodiment the minimization is carried out using a closed form derivation according to Tikhonov by solving the unconstrained least square problem of the equation

$$\min_{\boldsymbol{H}^{\mathrm{RHP,TF}}} \sum_{\overline{m}=0}^{M-1} \sum_{\overline{n}=0}^{N-1} \left\| \boldsymbol{G}_{\boldsymbol{H}^{\mathrm{RHP,TF}}}^{\alpha,\beta}(\overline{m},\overline{n}) \right\|_{\mathrm{F}}^{2} + \Omega \left\| \boldsymbol{C}\boldsymbol{Q}vec\{\boldsymbol{H}^{\mathrm{RHP,TF}} - \widehat{\boldsymbol{h}}^{LS,\ DD}\} \right\|_{2}^{2}$$

where $\Omega$ is a regularization parameter taking into account the noise.

As precalculated solution can be used according to one embodiment for different $\Omega$ precalculated systems of linear equations are calculated in advance of receipt of a frame, and the respective linear system to be minimized and solved is chosen depending on the determined noise level.

Thus according to the proposed scheme there are different channel estimation modes:

All modes rely on and use a pilot-aided channel estimation for a OTFS systems in which pilot, data and guard symbols are placed in the DD domain. The schemes exploit smoothness regularization in TF to suppress the leakage observed in the DD domain by combing a least square CMD estimation in the DD domain with additional minimization the energy of the second order derivatives in TF domain of the regularization matrix, i.e. an OTFS regularized Hessian estimation (ORHE).

Hereby one uses an initial least square CMD estimate in DD. Further one smooths a preferably padded regularization matrix in the TF domain. The size of the padded matrix is larger than the received frame. For a frame of size MN the padded matrix has the preferred size (M+2)(N+2). The hessian matrix is minimized to estimate of CMD in TF domain (the frame is bigger e.g. $(N + 2)(M + 2)$).

The OTFS regularized Hessian estimation (ORHE) estimation can be further improved depending on the a priori knowledge of the channel mode and noise power estimation capabilities. The three further variants are listed below:

The most preferred mode is the so called OTFS regularized Hessian estimation with mode- and noise-awareness (ORHE-MNA). It obtains the best channel estimate and is closest to the perfect channel estimate. OTFS regularized Hessian estimation with mode- and noise-awareness (ORHE-MNA) leverages sources of information both on noise power as well as the ratio of delay-Doppler spread. Whereas the noise level influences the relaxation threshold $\delta$, the delay-Doppler spread ratio is used to set the weight factors $\alpha$ and $\beta$.

In cases where the delay-Doppler spread is unknown, i.e. in cases without mode awareness but knowledge on the noise level one can use the OTFS regularized Hessian estimation with noise awareness (ORHE-NA) with $\alpha = \beta = 1$, without assuming any mode-awareness, i.e. isotropic regularization.

In cases with mode awareness only, i.e. knowledge on the delay-Doppler spread ratio but no knowledge on the noise level on can use OTFS regularized Hessian estimation with mode awareness (ORHE-MA) The mode-awareness estimator assumes noiseless measurements by setting the relaxation threshold $\delta$ to zero, $\delta = 0$.

In the actual communication scenario it is beneficial and or might be necessary to decide which scheme to use on a frame to frame basis. There might be cases where the initial least-square channel main diagonal estimation LS CMDE will be sufficient for the equalization of the frame. In other situation the variant to be used is chosen depending on the available information and knowledge on the transmission mode (mode awareness) and/or knowledge on the noise level (noise awareness).

The different information on noise level and/or the channel mode can come from different sources. For the noise, i.e. the noise-awareness, this information can come from a lookup table, where noise level information is stored for different locations of the vehicle for example. Other parameters like (temperature, whether, humidity, etc. might also influence the noise level) so the look up table might take these parameters into account as well. One can further determine the noise tuning parameter as disclosed in publication A. Further it can be learned from prior thoroughly analyzed frames that are fed to neuronal network. Further the information on the noise level might be received from a base station or other another communication node., i.e. be supplied by other external sources.

The mode-awareness is similar. If no knowledge is present the weighting factors $\alpha$ and $\beta$ are chosen to be equal, $\alpha = \beta$. In many cases the delay-Doppler spread can be deduced directly in the pilot region of the delay doppler domain from the transformed information of the received frame. The channel mode is often dependent on the location of the communication partners. Thus the information may come from a lookup table. Alternatively and/or additionally information may be received from communication partners, i.e. external sources. Again the information may be learned by training an artificial intelligence with frames thoroughly analyzed with regard to the actual channel modes showing up in the respective communications. One other source of information may come from knowledge about the communication setting, i.e. the relative speed, the type of setting as in no line of sight (NOL) or obstructed line of sight (LOS) etc.

The information on the channel mode as well as the noise level may be supplied to communication partners or stored for future use. The term look-up table is to be understood to comprise the term database or other storage means of organizing data for storage and retrieval.

Method of equalizing a frame with respect to transmission channel effects, comprises according to one embodiment the steps of

receiving a communication frame of an OTFS modulated signal using a pilot and guard symbols placed in the delay-Doppler domain;

performing a least square channel main diagonal estimate;

evaluating whether the initial least square channel main diagonal estimation is sufficient for equalization; and

if not perform an estimation according to one of the proposed estimation schemes; equalize the frame according using

if the initial least square channel main diagonal estimation has been determined to be sufficient, initial least square channel main diagonal estimation or,

if the initial least square channel main diagonal estimation has been determined to not be sufficient ,the channel estimate according to any one of the new proposed estimation schemes.

Brief description of the drawings

Fig. 1 diagram depicting the decay of the Dirichlet kernel;

Fig. 2a the perfect channel main diagonal estimation (CDME) in the delay Doppler (DD) domain for a no line of sight (NLOS) communication with a relative speed of 200 km/h;

Fig2b the respective perfect CDME in the time frequency (TF) domain corresponding to fig. 2a;

Fig. 2c a standard CDME in the DD domain for the same communication scenario as in Fig. 2a using the parameter $W_n$ = 3 to account for fractional delays;

Fig. 2d the standard CDME in the TF domain corresponding to fig.2c;

Fig. 3 an exemplary OTFS frame;

Fig. 4 depicting the spreading region U for a doubly-dispersive communication channel of a user moving with 250 km/h;

Fig. 5 flow chart for a method to equalize a frame in a mobile communication;

Fig. 6a the CDME in TF (top) and DD (bottom) domain for a vehicular channel with a relative speed of 500 km/h;

Fig. 6b the LS CMDE in TF (top) and DD (bottom) domain corresponding to fig. 6a;

Fig. 6c the SR CMDE in TF (top) and DD (bottom) domain corresponding to fig. 6a; and

Fig. 6d the ORHE-MNA in TF (top) and DD (bottom) domain corresponding to fig. 6a.

Fig. 3 depicts an exemplary frame 300 for an OTFS modulation scheme in the delay Doppler domain. The frame has a size von N (0, ... , N-1) in the Doppler axis 301 direction and M (0, ... , M-1) in the delay axis 302. A pilot symbol 311 (filled circle) is placed at the origin (0,0) depicted by a filled circle. The pilot is surrounded by a guard interval or guard region 320. Symbols 321 in the guard area are chosen to be zero (empty circles) to avoid interference of the pilot symbol with the data symbols 331 (hatched circles) placed in the rest of the frame the data region 330, to carry payload or data of the frame 300.

The guard region's size is chosen according to the expected maximum delays and Doppler shifts occurring. If Q is associated with the maximum expected Doppler shift than the guard region extends on the Doppler axis from -2Q up to +2Q. On the time axis the guard region extends from -W to +W when the maximum delay is associated with W.

The pilot symbol 311 is surrounded by a rectangular pilot region 310 spanning from -Q to Q and form -$W_n$ to W, which corresponds to the long term expected region the received pilot symbol will be spread to after retransformation to the delay Doppler domain. This Area is also referred to as *U.* W is chosen such that the maximum delay $\tau_{max}$ is less or equal $WMF$, where F is the frequency spacing of the delay Doppler frame grid. Respectively Q is chosen such that the maximum Doppler shift $v_{max}$ is less or equal to QNT with T being the time spacing of the delay Doppler frame grid.

Even though there should not be any negative delays the transformation of the DSFT due to fractional delays smears the information to negative delay as well. For this reason the parameter -$W_n$ is introduced. For the frame of fig. 3 Q is chosen to be 3, W is chosen to be 10 and $W_n$ is choosen to be 3.

Fig 4 depicts this spreading for a certain channel of a user having a speed of 250 km/h. As can be seen from fig 4. The spreading is well localized within the region U, being the pilot region 310.

Fig. 2a to 2d show the results of channel estimations. Fig 2a depicts the perfect channel main diagonal estimation CDME in the delay doppler domain, the density of the lines corresponds to the intensity at the respective grid position. One observes that the intensity is well located in the corners 401, 402. One has to keep in mind that the grid is cyclic thus wraps at the edges.

Fig 2c depicts the analogous perfect CMDE in the time frequency domain. Keeping in mind that the grid is cyclic one observes that a discontinuity occurs at the edges for example at 412 compared to 413 on opposite edges.

Figs. 2b and 2d depict the respective frames in the DD domain and the TF domain for the same communication with a standard CMDE using a parameter $W_n$ = 3.

Compared to the perfect CMD the standard CMDE the intensity at the edges is lowered as can be inferred form the comparison of the corresponding grid locations 412, 413 of Fig. 2b with 432, 433 respectively in fig. 2d.

The spreading 421, 422 in the pilot region can be observed next to the corners 401, 402. This can be used to estimate the delay-Doppler spread ratio to determine the wight factors for the proposed channel estimation schemes OHRE-MA and OHRE-MNA.

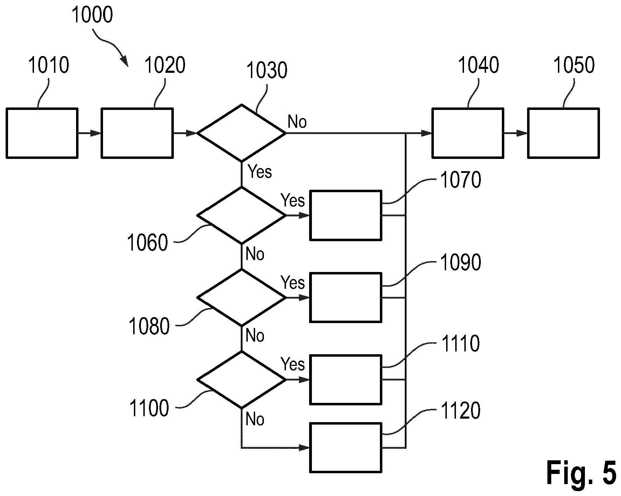

Fig. 5 depicts a flow chart of the equalization process 1000 in the mobile communication. First a frame is received 1010. A least-square channel main diagonal estimation (LS CMDE) is carried out 1020. From the result one can decide whether a strong doubly dispersive transmission channel was used 1030. If this is not the case, i.e. for example the pilot is very well localized in the LS CMDE in the DD, the LS CMDE can be used for equalizing the frame 1040. One yields an equalized frame 1050.

In case one detects a strong doubly-dispersive transmission one evaluates the information available about the communication mode as well as the noise level. One test whether full knowledge about both transmission mode and noise exists 1060, i.e. whether mode and noise awareness exists. The different methods to derive mode awareness and noise awareness have been described above. Any of these method or schemes may be applied in combination to choose the weight parameters $\alpha$ and $\beta$ or more precisely their ratio and the relaxation threshold parameter $\delta$.

In case mode and noise awareness exists the OHRE-MNA estimation is carried out 1070 and used for the equalization step 1040.

Otherwise, when no full mode and noise awareness exist, it is tested 1080 whether knowledge about the channel mode exists (e.g. NLOS, speed and obstructed LOS, etc.), but no knowledge about the noise level. If this is the case, the OHRE-MA is carried out 1090. The weight factors again are chosen according to the knowledge about the channel mode, e.g. the spreading of the pilot in the LS CMDE in the DD domain, according to received information, according to information from a lookup table, etc.. The relaxation threshold $\delta$ can be set to zero. With mode awareness only the OHRE-MA estimation is used for the equalization step 1040.

If no mode awareness exists one tests 1100 whether knowledge about the noise but not the channel mode is available. If this is the case the OHRE-NA estimation 1110 is carried out. The weight parameters $\alpha$ and $\beta$ are chosen to be equal, preferably $\alpha = \beta = 1$. The relaxation threshold $\delta$ is set to correspond to the noise level i.e. equal to the square of the expected noise.

Finally, if neither noise awareness nor mode awareness exist, the "pure" OHRE estimation is carried 1120. The weight parameters $\alpha$ and $\beta$ are chosen to be equal, preferably $\alpha = \beta = 1$. The relaxation threshold $\delta$ can be set to zero.

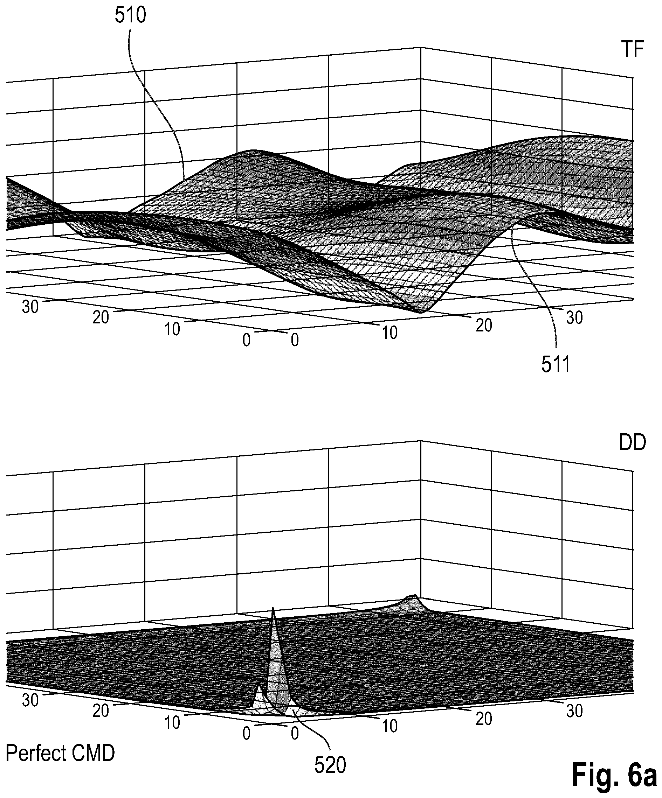

Fig 6a to 6d, once more depict different estimations in the time frequency (TF) domain (top) and delay Doppler (DD) domain (bottom). The basic scenario is a LOS vehicular communication with relative speed of 500 km/h. All estimations use the parameter $W_n$ = 2 to take into account leakage smear to negative delays.

Fig. 6a depicts a perfect CMDE. One observes a very smooth surface 510 in the TF domain and a localized pilot intensity 520 in the DD domain.

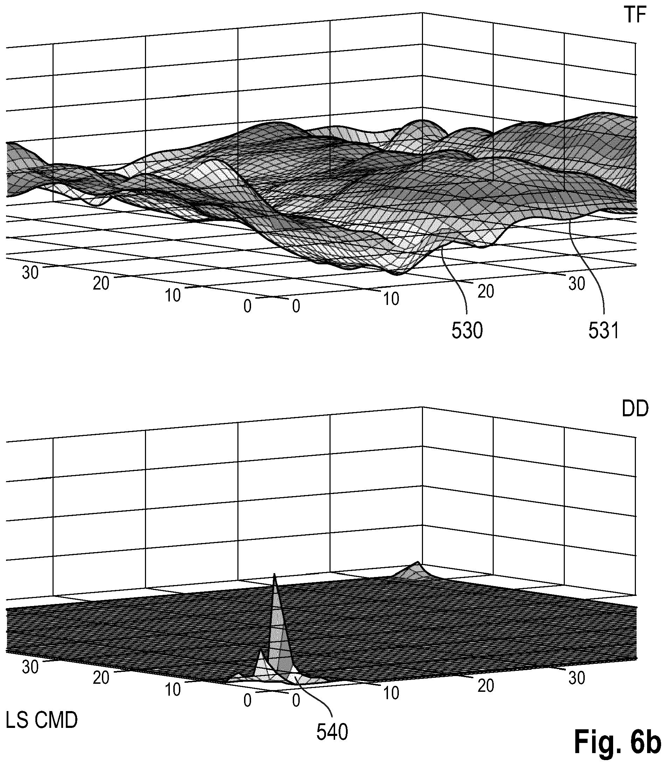

Fig. 6b depicts the LS CMDE. The surface 530 in the TF domain shows oscillations. Further the intensity drops to the edge for example in location 531. This is not the case in the perfect CMDE for example at 511. The pilot intensity 540 is still localized but is smeared a little more than in Fig. 6a.

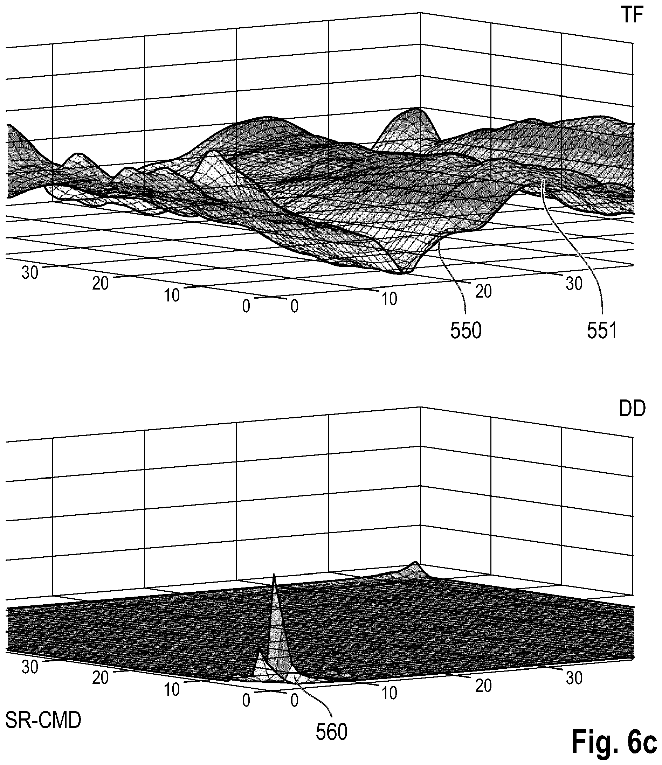

Fig. 6c depicts the smoothness regularized channel main diagonal estimation SR-CMDE proposed by the inventor et al. in Leakage suppression in pulse-shaped otfs delay-doppler-pilot channel estimation," IEEE Wireless Communications Letters, vol. 11, no. 6, pp. 1181-1185, 2022. The surface 550 in the TF domain is showing oscillations as well. Nevertheless the drop at the edge at the location 551 is not as sharp as in Fig. 6b at 531. The pilot intensity 560 is localized similar to fig 6b.

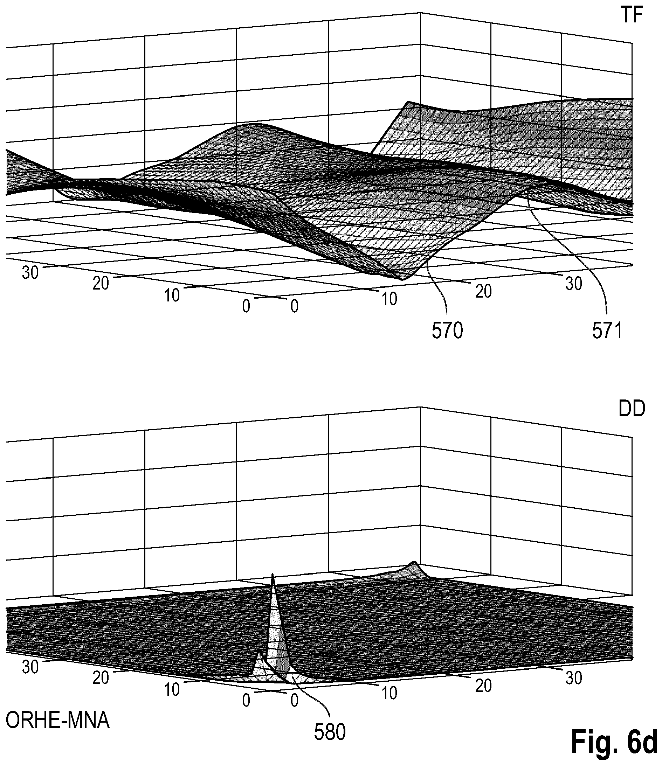

Fig. 6d finally depict the OHRE-MNA estimation . One yields a smooth surface 570 very similar to the perfect CMD estimation of Fig. 6a. There is no drop towards the edge at position 571, corresponding to 531 and 551 in fig. 6b and 6c respectively. The localization of the pilot intensity 580 is also slightly better than for the estimations depicted in fig. 6b and 6c very similar to the perfect CMD estimation of fig. 6a.

**Reference numerals**

| 300 | frame |
|---|---|
| 301 | Doppler axis |
| 302 | delay axis |
| 310 | pilot region |
| 311 | pilot symbol |
| 320 | guard region |
| 321 | zeros (guard symbols) |
| 330 | data region |
| 331 | data symbol |
| 340 | dashed frame |
| 401 | corner |
| 402 | corner |
| 412 | location |
| 413 | location on opposite edge |
| 421 | spreading |
| 422 | spreading |
| 432 | location |
| 433 | location |
| 510 | surface of CMDE in TF domain |
| 511 | location at edge of TF frame |
| 520 | pilot intensity in DD domain |
| 530 | surface of LS CMDE in TF domain |
| 531 | location at edge of TF frame |
| 540 | pilot intensity in DD domain |
| 550 | surface of SR CMDE in TF domain |
| 551 | location at edge of TF frame |
| 560 | pilot intensity in DD domain |
| 570 | surface of LS CMDE in TF domain |
| 571 | location at edge of TF frame |
| 580 | pilot intensity in DD domain |
| 1000 | equalization process |
| 1010 | receive frame |
| 1020 | perform LS COME |
| 1030 | test if transmission is strongly double dispersive |
| 1040 | equalize frame |
| 1050 | equalized frame |
| 1060 | test, knowledge about channel mode (mode awareness) and about noise level (noise awareness)? |
| 1070 | OHRE-MNA estimation |
| 1080 | test, knowledge about channel mode only, but not about noise level? |
| 1090 | OHRE-MA estimation |
| 1100 | test, knowledge about noise level only, but not about channel mode? |
| 1110 | OHRE-NA estimation |
| 1120 | OHRE estimation without noise awareness and without mode awareness |

## Claims

1. Method for channel estimation in a wireless communication system using an orthogonal time frequency and space (OTFS) modulation with at least one pilot-symbol placed in the delay-Doppler domain, comprising

  a) performing at least part of a 2D discrete symplectic Fourier transform (DSFT) to map the time-frequency symbols of a received frame to a pilot region and thereby perform an initial least-square channel main diagonal estimation (LS CMDE) in the delay-Doppler domain;
  b) minimize the energy of the second order derivatives of the coefficient matrix H representing the channel main diagonal estimate in the time frequency domain, wherein the minimized channel main diagonal estimate is named OTFS regularized Hessian estimation (OHRE), wherein the minimization subject to the condition that the minimized channel main diagonal estimation transformed to the pilot region of the delay Doppler domain does not deviate with respect to an Euclidean norm from the initial least square main diagonal estimation (LS CMDE) estimate by more than a relaxation threshold $\delta$, being lager or equal to zero.

2. Method according to claim 1, wherein step b) comprises padding the coefficient matrix H for a frame of the dimension M·N to the size (M+2). (N+2) and wherein the matrix of the second order derivative of the channel main diagonal estimation in the time domain is called Hessian matrix $G_H$ for the coefficient matrix H and wherein the minimization comprises minimizing the padded Hessian matrix $G_{HRHP,TF}G_H$ of the padded coefficient matrix H$^{RHP,TF}$ in the time-frequency domain using the Frobenius norm with the constraint, that the Euclidean norm of the difference of the transform to the pilot region of the truncated minimized padded coefficient matrix H$^{RHP,TF}$ and of the initial channel main diagonal estimation in the pilot region is smaller than the relaxation threshold $\delta$, being lager or equal to zero.

3. Method according to claim 2, wherein the second order derivatives of the Hessian matrix for the padded coefficient matrix H$^{RHP,TF}$ is given by:

$$G_{H^{RHP,TF}}(\bar{m}, \bar{n}) = \begin{bmatrix} [H^{RHP,TF} * \boldsymbol{\Phi}_{\text{ff}}]_{\bar{m},\bar{n}} & [H^{RHP,TF} * \boldsymbol{\Phi}_{\text{tf}}]_{\bar{m},\bar{n}} \\ [H^{RHP,TF} * \boldsymbol{\Phi}_{\text{tf}}]_{\bar{m},\bar{n}} & [H^{RHP,TF} * \boldsymbol{\Phi}_{\text{tt}}]_{\bar{m},\bar{n}} \end{bmatrix},$$

with $\bar{m} = 0,...,M$ - 1, $\bar{n} = 0,...,N$ - 1 wherein $[H^{RHP,TF} * \boldsymbol{\Phi}_{\text{xx}}]_{\bar{m},\bar{n}} = \sum_{\bar{l}=-1}^{1} \sum_{\bar{k}=-1}^{1} h_{\bar{m}-\bar{l}+1,\bar{n}-\bar{k}+1} \phi_{\bar{l}+1,\bar{k}+1}$ with $\bar{m} = 0,...,M$ - 1, $\bar{n} = 0,...,N$ - 1, is the non-cyclic convolution of the padded coefficient matrix $H^{RHP,TF} = \{h_{\bar{m},\bar{n}}\}$ having the size $(M + 2) \times (N + 2)$ with kernels of the size $3 \times 3$ by

$$\boldsymbol{\Phi}_{\text{tt}} = \begin{bmatrix} 0 & 0 & 0 \\ -1 & 2 & -1 \\ 0 & 0 & 0 \end{bmatrix}, \boldsymbol{\Phi}_{\text{ff}} = \begin{bmatrix} 0 & -1 & 0 \\ 0 & 2 & 0 \\ 0 & -1 & 0 \end{bmatrix}, \text{ and } \boldsymbol{\Phi}_{\text{tf}} = \begin{bmatrix} -1 & 0 & 0 \\ 0 & -1 & 0 \\ 0 & 0 & 0 \end{bmatrix}.$$

4. Method according to claim 3, wherein the a weighted Hessian matrix $$G_{H^{RHP,TF}}^{\alpha,\beta}(\bar{m}, \bar{n}) = \begin{bmatrix} \alpha^2 [H^{RHP,TF} * \boldsymbol{\Phi}_{\text{ff}}]_{\bar{m},\bar{n}} & \alpha\beta [H^{RHP,TF} * \boldsymbol{\Phi}_{\text{tf}}]_{\bar{m},\bar{n}} \\ \alpha\beta [H^{RHP,TF} * \boldsymbol{\Phi}_{\text{tf}}]_{\bar{m},\bar{n}} & \beta^2 [H^{RHP,TF} * \boldsymbol{\Phi}_{\text{tt}}]_{\bar{m},\bar{n}} \end{bmatrix}$$ having two weight factors $\alpha$ and $\beta$ is used to minimize the energy of the Matrix H representing the transmission channel, wherein the weight factors $\alpha$ and $\beta$ rare chosen dependent on a delay doppler spread ratio, indicative of the matrix relative influence of the delay shifts versus the Doppler shift in the communication channels.

5. Method according to any one of the preceding claims, wherein the noise power is used to determine the preset limit value relaxation threshold $\delta$.

6. Method according to claims 4 and 5, wherein the delay doppler spread ratio as well as the noise power are taken into account when minimizing the second order derivatives of the coefficient matrix H by minimizing

$$\min_{\boldsymbol{H}^{\text{RHP,TF}}} \sum_{m=0}^{M-1} \sum_{\bar{n}=0}^{N-1} \left\| \boldsymbol{G}_{\boldsymbol{H}}^{\alpha,\beta}{}_{\text{RHP,TF}}(\bar{m}, \bar{n}) \right\|_{\text{F}}^{2}$$

subject to $\frac{1}{2} \left\| \boldsymbol{C}\boldsymbol{Q}vec\{\boldsymbol{H}^{\text{RHP,TF}}\} - \hat{\boldsymbol{h}}^{LS, DD} \right\|_{2}^{2} \leq \delta$, wherein $\boldsymbol{Q}$ is a matrix truncating the padding and $\boldsymbol{C}$ is the transformation to the pilot region of the delay Doppler domain and $\hat{h}^{LS, DD}$ Is the initial cannel main diagonal estimation in the pilot region of the delay Doppler domain.

7. Method according to any claim 4 to 6, wherein delay-Doppler spread ration is determined in the pilot region of the delay-Doppler domain from the result of the 2D discrete symplectic Fourier transform (DSFT) to map the time-frequency symbols of the received frame to a pilot region.

8. Method to according to any claim 4 to 6, wherein delay-Doppler spread ration is determined according to one or more of the following determination schemes of the group comprising:

using a look-up table für the delay-Doppler spread ratio based on the current location of the receiver;
predicting the delay-Doppler spread ratio via an deep learning machine trained with previous transmission frames for which the spreading ratio was determined using a full linear minimum mean squared error equalizer or minimum mean squared error estimation;
receiving the delay-Doppler spread ratio from an external source estimating the delay-Doppler spread ratio from the knowledge of communication environment.

9. Method according to claim 5 to 8, wherein the noise power is determined by one of the following schemes of the group comprising:

   using a look up table dependent on the location
   determining noise tuning parameter;
   predicting the noise power via an deep learning machine trained with previous transmission frames for which the noise level has been determined by learned prediction models
   receiving the noise power from an external source.

10. Method according to one of the above claims 6 to 9, wherein the minimization is carried out using a closed form derivation according to Tikhonov by solving the unconstrained least square problem of the equation

$$\min_{H^{\mathrm{RHP,TF}}} \sum_{\bar{m}=0}^{M-1} \sum_{\bar{n}=0}^{N-1} \left\| G_{H^{\mathrm{RHP,TF}}}^{\alpha,\beta}(\bar{m},\bar{n}) \right\|_{\mathrm{F}}^2 + \Omega \left\| CQ vec\{ H^{\mathrm{RHP,TF}} - \hat{h}^{LS,\ DD}\} \right\|_2^2$$

where $\Omega$ is a regularization parameter taking into account the noise.

11. Method according to claim 10, wherein for different $\Omega$ precalculated systems of linear equations are calculated in advance of receipt of a frame, and the respective linear system to be minimized and solved is chosen depending on the determined noise level.

12. Method of equalizing a frame with respect to transmission channel effects, comprising the steps of

   receiving a communication frame of an OTFS modulated signal using a pilot and guard symbols placed in the delay-Doppler domain;
   performing a least square channel main diagonal estimate;
   evaluating whether the initial least square channel main diagonal estimation is sufficient for equalization; and
   if not perform an estimation according to one of the claims 1 to 11; equalize the frame according using
   if the initial least square channel main diagonal estimation has been determined to be sufficient, initial least square channel main diagonal estimation or,
   if the initial least square channel main diagonal estimation has been determined to not be sufficient ,the channel estimate according to any one of the claims 1 to 11.

magnitude (dB)

normalized frequency

**Fig. 1**

Perfect CMDE - DD domain.

**Fig. 2a**

Std. CMDE - DD domain ($W_n=3$)

**Fig. 2b**

Perfect CMDE - TF domain.

**Fig. 2c**

Std. CMDE -TF domain ($W_n$=3)

**Fig. 2d**

**Fig. 3**

O pilot sym.   O guard sym.   ⊘ data sym.   ⌐⌐⌐ pilot region $J_p$

**Fig. 4**

Fig. 5

510

TF

511

30    20    10    0    0    10    20    30

DD

Perfect CMD

520

30    20    10    0    0    10    20    30

**Fig. 6a**

Fig. 6b

TF

550    551

DD

SR-CMD

560

Fig. 6c

TF

30    20    10    0    0    10    20    30

570    571

DD

30    20    10    0    0    10    20    30

ORHE-MNA

580

**Fig. 6d**

Europäisches
Patentamt

European
Patent Office

Office européen
des brevets

# EUROPEAN SEARCH REPORT

**Application Number**

EP 23 19 7427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PFADLER ANDREAS ET AL: "Estimation of Doubly-Dispersive Channels in Linearly Precoded Multicarrier Systems Using Smoothness Regularization", IEEE TRANSACTIONS ON WIRELESS COMMUNICATIONS, IEEE SERVICE CENTER, PISCATAWAY, NJ, US, vol. 23, no. 2, 26 June 2023 (2023-06-26), pages 1293-1307, XP011960391, ISSN: 1536-1276, DOI: 10.1109/TWC.2023.3287948 [retrieved on 2023-06-26] * the whole document * | 1-12 | INV. H04L25/02 ADD. H04L27/26 |
| A | PFADLER ANDREAS ET AL: "Leakage Suppression in Pulse-Shaped OTFS Delay-Doppler-Pilot Channel Estimation", IEEE WIRELESS COMMUNICATIONS LETTERS, vol. 11, no. 6, 1 June 2022 (2022-06-01), pages 1181-1185, XP093135671, Piscataway, NJ, USA ISSN: 2162-2337, DOI: 10.1109/LWC.2022.3160657 * the whole document * | 1-12 | |

**TECHNICAL FIELDS SEARCHED (IPC)**

H04L

The present search report has been drawn up for all claims

| Place of search | Date of completion of the search | Examiner |
|---|---|---|
| Munich | 28 February 2024 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Pulse-Shaped OTFS over Doubly-Dispersive Channels: One-Tap vs. Full LMMSE Equalizers. *2021 IEEE Int. Conf. on Commun. Workshops (ICC Workshops)*, 2021, 1-6

- Leakage suppression in pulse-shaped otfs delay-doppler-pilot channel estimation. *IEEE Wireless Communications Letters*, 2022, vol. 11 (6), 1181-1185